# EUROPEAN PATENT SPECIFICATION

(11) **EP 2 930 206 B1**
(45) Date of publication and mention of the grant of the patent: **09.08.2017**
(21) Application number: 15160774.4
(22) Date of filing: 25.03.2015
(51) Int. Cl.: C08L 21/02, C09D 121/02

(54) **AQUEOUS COMPOSITION WITH LATEX POLYMER AND POLYETHYLENE OXIDE**
WÄSSRIGE ZUSAMMENSETZUNG MIT LATEXPOLYMER UND POLYETHYLENOXID
COMPOSITION AQUEUSE AVEC UN POLYMÈRE DE LATEX ET DE L'OXYDE DE POLYÉTHYLÈNE

(30) Priority: 09.04.2014 EP 14290102
(43) Date of publication of application: 14.10.2015
(73) Proprietor: Rohm and Haas Europe Services ApS Succursale France, 75579 Paris Cedex 12 (FR)
(72) Inventor: Egraz, Thierry, 06560 Valbonne (FR)
(74) Representative: McLean, Craig Sutherland

(56) References cited:
- US-A- 4 062 821
- US-A- 4 106 421
- DATABASE WPI Week 199624 Thomson Scientific, London, GB; AN 1996-233201 XP002741489, & JP H08 89096 A (NISHIKAWA GOMU KOGYO KK) 9 April 1996 (1996-04-09)

## Description

It is often desired to apply a layer of an aqueous composition to a substrate. Many aqueous compositions that are useful for this purpose contain latex polymer. Common methods of applying such compositions involve exposing the composition to relatively high shear rate. Common methods of applying such compositions include, for example, roller coating, spraying, size press, and screen coating. In the past, it has often been observed that when an aqueous composition containing a latex polymer was exposed to relatively high shear rate, the latex polymer would become unstable. The loss of stability of the latex might cause, for example, an unacceptably large rise in viscosity or deposition of solid polymer or a combination thereof.

In the past, one approach to attempting to improve the stability of aqueous compositions containing latex polymers was to add relatively large amounts of one or more surfactant. This approach has the disadvantage of affecting other properties of the latex polymer. For example, in some cases, large amounts of surfactant caused the aqueous composition to produce unacceptably large amount of foam during the coating process. For another example, it is sometimes desired to dry the layer of aqueous composition that has been applied to the substrate, and it is sometimes desired that the remaining dry layer of polymer be relatively hydrophobic. Large amounts of surfactant can degrade such hydrophobicity.

US 4,062,821 describes aqueous coating composition that contains (A) a water-insoluble addition copolymer of certain monomers in latex form, (B) a water-soluble ureaformaldehyde or triazine-formaldehyde reaction product or a water-soluble methanol or ethanol ether thereof, or a combination of the aminoplast products, and, as an essential component, (C) a water-soluble polyethylene oxide having an average molecular weight of from 400 to 100,000. In the description given by US 4,062,821, the amount of polyethylene oxide is 1 to 5 percent based on the total weight of (A) and (B) on a solids basis. JP H08 89096 discloses a biodegradable polymeric coating material for plants for reducing water loss and salt damage. US 4,106,421 discloses aqueous acrylic thermosetting resinous compositions and their use as coatings to decorate metal substrates.

It is desired to provide an aqueous composition that contains an aqueous latex polymer and that has improved ability to remain stable when exposed to relatively high shear rate. It is also desirable that the aqueous composition have an acceptably low level of tendency to produce foam. It is also desirable that the aqueous composition has an acceptably high degree of hydrophobicity when applied to a substrate and dried.

The following is a statement of the invention.

The first aspect of the present invention is an aqueous composition comprising a latex polymer and polyethylene oxide, wherein said polyethylene oxide has solution viscosity of 5 mPa*s to 150 mPa*s; wherein said solution viscosity is measured by dissolving said polyethylene oxide in water at weight ratio of 5 parts polyethylene oxide to 95 parts water and measuring the viscosity of the solution using a Brookfield viscometer LVD2 with number 2 spindle at 30 rpm at 25°C; wherein said polyethylene oxide is present in an amount, by weight based on the dry weight of said latex polymer, of 0.3% to 1.5%; and wherein the latex polymer contains polymerized units of one or more ethenyl esters of a substituted or unsubstituted alkanoic acid, one or more vinyl aromatic monomers, one or more acrylic monomers, or a mixture thereof. Preferably the polyethylene oxide is present in an amount, by weight based on the dry weight of said latex polymer, of 0.4% to 1.1%. Preferably the polyethylene oxide has number-average molecular weight of 80,000 to 120,000.

The second aspect of the present invention is a method of applying an aqueous composition to a substrate, said method comprising exposing an aqueous composition of the first aspect to a shear rate of 1,000 s⁻¹ or higher and applying a layer of said composition to a substrate. Preferably the aqueous composition is applied to the substrate by roll coating. Preferably the substrate is selected from paper, paperboard, polymeric film, woven fabrics, nonwoven fabrics, unbonded mats of nonwoven fibers, and release papers.

The following is a detailed description of the invention.

As used herein, the following terms have the designated definitions, unless the context clearly indicates otherwise.

A "polymer," as used herein is a relatively large molecule made up of the reaction products of smaller chemical repeat units. Polymers may have structures that are linear, branched, star shaped, looped, hyperbranched, crosslinked, or a combination thereof; polymers may have a single type of repeat unit ("homopolymers") or they may have more than one type of repeat unit ("copolymers"). Copolymers may have the various types of repeat units arranged randomly, in sequence, in blocks, in other arrangements, or in any mixture or combination thereof.

Polymer molecular weights can be measured by standard methods such as, for example, size exclusion chromatography (SEC, also called gel permeation chromatography or GPC). Polymers have number-average molecular weight (Mn) of 1000 or more. Polymers may have extremely high Mn; some polymers have Mn above 1,000,000; typical polymers have Mn of 1,000,000 or less. Some polymers are crosslinked, and crosslinked polymers are considered to have infinite Mn.

As used herein "weight of polymer" means the dry weight of polymer.

Molecules that can react with each other to form the repeat units of a polymer are known herein as "monomers." The repeat units so formed are known herein as "polymerized units" of the monomer.

Vinyl monomers have the structure I 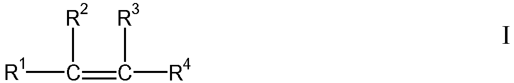 where each of R¹, R², R³, and R⁴ is, independently, a hydrogen, a halogen, an aliphatic group (such as, for example, an alkyl group), a substituted aliphatic group, an aryl group, a substituted aryl group, another substituted or unsubstituted organic group, or any combination thereof.

Vinyl monomers include, for example, styrene, substituted styrenes, dienes, ethylene, other alkenes, dienes, ethylene derivatives, and mixtures thereof. Ethylene derivatives include, for example, unsubstituted or substituted versions of the following: ethenyl esters of substituted or unsubstituted alkanoic acids (including, for example, vinyl acetate and vinyl neodecanoate), acrylonitrile, (meth)acrylic acids, (meth)acrylates, (meth)acrylamides, vinyl chloride, halogenated alkenes, and mixtures thereof. As used herein, "(meth)acrylic" means acrylic or methacrylic; "(meth)acrylate" means acrylate or methacrylate; and "(meth)acrylamide" means acrylamide or methacrylamide. "Substituted" means having at least one attached chemical group such as, for example, alkyl group, alkenyl group, vinyl group, hydroxyl group, carboxylic acid group, other functional groups, and combinations thereof. Substituted monomers include, for example, monomers with more than one carbon-carbon double bond, monomers with hydroxyl groups, monomers with other functional groups, and monomers with combinations of functional groups. (Meth)acrylates are substituted and unsubstituted esters or amides of (meth)acrylic acid.

As used herein, acrylic monomers are monomers selected from (meth)acrylic acid, aliphatic esters of (meth)acrylic acid, aliphatic esters of (meth)acrylic acid having one or more substituent on the aliphatic group, (meth)acrylamide, N-substituted (meth)acrylamides, and mixtures thereof.

As used herein, an "alkyl (meth)acrylate monomer" has the structure II 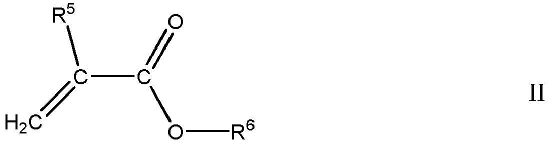 where R⁵ is hydrogen or methyl, and R⁶ is an alkyl group. As used herein, an "alkyl acrylate monomer" has structure II in which R⁵ is hydrogen. As used herein, an "alkyl methacrylate monomer" has structure II in which R⁵ is methyl.

As used herein, an "acrylic " polymer is a polymer in which 30% or more of the polymerized units are selected from acrylic monomers and also in which 5% or more of the polymerized units are selected from the group consisting of acrylic monomers and vinylaromatic monomers. The percentages are by weight based on the weight of the polymer.

As used herein, "vinyl aromatic" monomers are vinyl monomers that contain one or more aromatic ring. The aromatic ring may be substituted or unsubstituted.

Polyethylene oxide has the structure III 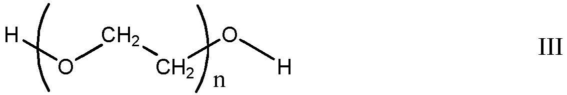 where n is 50 or more.

A composition is herein considered to be "aqueous" if the composition contains water in the amount of 25% or more by weight based on the weight of the composition.

When it is stated herein that a substance is present in a composition at 0% to X%, it is meant that the substance is either absent entirely or, if present, is present in an amount of less than X%.

The composition of the present invention contains a latex polymer. The latex polymer is present in the form of particles dispersed in a continuous liquid medium. Preferably, the amount of water in the continuous liquid medium is, by weight based on the weight of the continuous liquid medium, 50% or more; more preferably 75% or more; more preferably 85% or more. Preferably, the volume-average mean particle size of the latex polymer particles is 50 nm to 1,000 nm.

Preferably the latex polymer is not soluble in water. Preferably, the amount of the latex polymer that dissolves in water, by weight based on the weight of the water, at 25°C is 0.2% or less; more preferably 0.1% or less; more preferably 0.05% or less.

The latex polymer contains polymerized units of one or more ethenyl esters of a substituted or unsubstituted alkanoic acid, one or more vinyl aromatic monomers, one or more acrylic monomers, or a mixture thereof. Among ethenyl esters of a substituted or unsubstituted alkanoic acid, preferred is vinyl acetate. Among vinyl aromatic monomers, preferred is styrene, alpha-methyl styrene, and mixtures thereof; more preferred is styrene. Among acrylic monomers, preferred are (meth)acrylic acid, alkyl (meth)acrylate monomers, and mixtures thereof.

Preferably, the amount of latex polymer in the composition is, by weight based on the total weight of the composition, 20% or more; more preferably 30% or more. Preferably, the amount of latex polymer in the composition is, by weight based on the total weight of the composition, 60% or less.

The composition of the present invention contains one or more polyethylene oxide (PEO). Each polyethylene oxide has structure III defined above. Preferably, the polyethylene oxide is soluble in water at 25°C in an amount of 1.5% or more by weight based on the weight of the water. Preferably, the composition of the present invention contains water in a continuous medium, and the polyethylene oxide that is present in the composition is dissolved in the continuous medium.

The number-average molecular weight of the polyethylene oxide is 50,000 or more; preferably 80,000 or more. The number-average molecular weight of the polyethylene is 150,000 or less; preferably 120,000 or less. The molecular weight of the polyethylene oxide may also be assessed by performing the following viscosity test. The polyethylene oxide is dissolved in water at weight ratio of 5 parts PEO to 95 parts water, and the viscosity of the solution is tested at 25°C using Brookfield viscometer LVD2, with number 2 spindle at 30 rpm. The viscosity is 5 millipascal*seconds (mPa*s) or higher, preferably 10 mPa*s or higher. The viscosity is 150 mPa*s or lower; preferably 60 mPa*s or lower.

The amount of polyethylene oxide is, by weight based on the dry weight of the latex polymer, 0.3% or more; preferably 0.4% or more. The amount of polyethylene oxide is, by weight based on the dry weight of the latex polymer, 1.5% or less; preferably 1.25% or less; more preferably 1.1% or less.

It is contemplated that the composition of the present invention either contains no water-soluble polymer other than polyethylene oxide or, if some other water-soluble polymer other than polyethylene oxide is present, then the amount of such other soluble polymer is relatively small. As used herein, a relatively small amount of a water-soluble polymer other than polyethylene oxide is, by weight based on the dry weight of the latex polymer, 10% or less; preferably 3% or less; more preferably 1% or less; more preferably 0.3% or less; more preferably 0.1% or less; more preferably 0.03% or less. A polymer other than polyethylene oxide is considered herein to be water-soluble if it can be dissolved in water at 25°C in an amount, by weight based on the weight of the water, of 0.5% or more.

One category of soluble polymer other than ethylene glycol (herein called category "F" polymers) are condensation products of urea with formaldehyde, condensation products of a triazine compound with formaldehyde, and derivatives of such condensation products obtained by reacting such condensation products with ethanol or methanol. Triazine compounds include isomers of triazine and derivatives of triazine such as, for example, melamine. Preferably, the amount of F polymers in the composition of the present invention is, by weight based on the dry weight of the latex polymer, 10% or less; more preferably 3% or less; more preferably 1% or less; more preferably 0.3% or less; more preferably 0.1% or less; more preferably 0.03% or less; more preferably 0%.

The present invention also relates to methods of applying an aqueous composition of the present invention to a substrate. In the practice of the present invention, such methods involve exposing the aqueous composition of the present invention to a shear rate of 1,000 s⁻¹ or higher. More preferably, the method of the present invention exposes the aqueous composition of the present invention to a shear rate of 1,500 s⁻¹ or higher.

Suitable methods of applying the aqueous composition to a substrate include, for example, spraying and roll coating. The shear rate of 1,000 s⁻¹ or higher may occur adjacent to the substrate or may occur elsewhere as part of the method of applying the aqueous composition to the substrate. For example, in some embodiments, in order to convey the aqueous composition from a storage container to an apparatus that will apply the aqueous coating to the substrate, the aqueous composition is conveyed using a pump that exposes the aqueous composition to a shear rate of 1,000 s⁻¹ or higher.

Suitable methods of roll coating include direct roll coating and reverse roll coating. Some suitable coating methods include an apparatus for metering the thickness of the layer of aqueous composition on the substrate. Suitable metering apparatus includes, for example, air knife and doctor blade.

Preferably, the thickness of the layer of the aqueous composition that is applied to the substrate is 10 µm to 500 µm. Preferably, after the layer of aqueous composition is applied to the substrate, the layer is dried or allowed to dry.

Preferred substrates are materials that have thickness of 2 mm or less and that are 10 cm or larger in each of the other two dimensions. Preferred substrates include paper, paperboard, polymeric film, woven fabrics, nonwoven fabrics, unbonded mats of nonwoven fibers, and release papers.

The following are examples of the present invention.

### Mechanical Stability Test Procedure

The following aqueous compositions were tested. In each case, water was added to the latex polymer to achieve a dry weight of latex polymer, as a percentage of the weight of the composition, of 40%. Each sample was tested on a Anton Paar - Physica MCR 301 rheometer with cone and plate geometry with cone angle of 0.996° and diameter 50 mm. Shear rate was 1,500 s⁻¹. Rheometry was performed at 50°C. The amount of PEO is recorded as % weight of PEO based on dry weight of the latex polymer.

Each sample was characterized by a "time to failure," which was assessed as follows. In each case, the shear stress was monitored as a function of time. In all cases, the shear stress rose as time progressed. The time to failure (Tf20) is the time at which the shear stress rises to 20 Pa. The time to failure (Tf200) is the time at which the shear stress rises to 200 Pa. Samples with "-C" in the sample number are comparative samples. The PEO was POLYOX™ water-soluble resin WSR N-10 (from Dow Chemical Company), which has solution viscosity of 12 to 50 mPa*s, as measured by dissolving the polyethylene oxide in water at weight ratio of 5 parts polyethylene oxide to 95 parts water and measuring the viscosity of the solution using a Brookfield viscometer LVD2 with number 2 spindle at 30 rpm at 25°C.

### Example 1: Mechanical Stability Results for Latex Polymer #1.

Latex Polymer #1 was assessed for Tf20, and the results were as follows:

| Sample | Latex Polymer | PEO (%) | Tf20 (minutes) |
|---|---|---|---|
| 1-P1-1-C | Latex Polymer #1, batch #1 | 0 | 22 |
| 1-P1-2-C | Latex Polymer #1, batch #2 | 0 | 20 |
| 1-P1-2-C | Latex Polymer #1, batch #3 | 0 | 29 |
| 1-P1-3-25C | Latex Polymer #1, batch #3 | 0.25 | 26 |
| 1-P1-3-50 | Latex Polymer #1, batch #3 | 0.5 | >77⁽¹⁾ |

| | | | |
|---|---|---|---|
| Note (1): Test was ended at 77 minutes. Sample still showed shear stress less than 20 Pa. | | | |

### Example 2: Mechanical Stability Using Latex Polymer #2

Latex Polymer #2, which is a different polymer composition from Latex Polymer #1, was tested as in Example 1. In Example 2, time to failure was assessed as Tf200, the time required for the shear stress to reach 200 Pa.

| Sample | Latex Polymer | PEO (%) | Tf200 (minutes) |
|---|---|---|---|
| 2-P2-0-C | Latex Polymer #22 | 0 | 20 |
| 2-P2-X | Latex Polymer #22 | 0.4 | 38 |

### Example 3: Mechanical Stability Using Latex Polymer #3

Latex Polymer #3, which is a different polymer composition from Latex Polymer #1, was tested as in Example 1. In Example 2, time to failure was assessed as Tf20, the time required for the shear stress to reach 20 Pa.

| Sample | Latex Polymer | PEO (%) | Tf20 (minutes) |
|---|---|---|---|
| 3-P3-1-C | Latex Polymer #3, batch #1 | 0 | 22 |
| 3-P3-2-C | Latex Polymer #3, batch #2 | 0 | 31 |
| 3-P3-2-25-C | Latex Polymer #3, batch #2 | 0.25 | 28 |
| 3-P3-2-50⁽²⁾ | Latex Polymer #3, batch #2 | 0.5 | 50 |
| 3-P3-2-50⁽²⁾ | Latex Polymer #3, batch #2 | 0.5 | 63 |
| 3-P3-2-1 | Latex Polymer #3, batch #2 | 1.0 | 52 |

| | | | |
|---|---|---|---|
| Note (2): Duplicate Samples | | | |

### Example 4: Low Shear Rate Viscosity using Latex Polymer #4

Some samples were also measured for conventional viscosity, using Brookfield viscometer LVD2, Spindle number 2 30 rpm, at 25°C. Each PEO was POLYOX™ water-soluble resin from Dow Chemical Company. Each sample containing PEO was prepared by first making a solution of 10% PEO by weight in water and then adding that solution into the latex. POLYOX™ WSR-N-80 has solution viscosity of 65-115 mPa*s, as measured by dissolving the polyethylene oxide in water at weight ratio of 5 parts polyethylene oxide to 95 parts water and measuring the viscosity of the solution using a Brookfield viscometer LVD2 with number 2 spindle at 30 rpm at 25°C.

| Sample | Latex Polymer | PEO type | PEO (%) | viscosity (mPa*s) |
|---|---|---|---|---|
| 4-P4-C | Latex Polymer #4 | none | 0 | 88 |
| 4-P4-L50 | Latex Polymer #4 | WSR-N10 | 0.5 | 309 |
| 4-P4-H50 | Latex Polymer #4 | WSR-N80 | 0.5 | 550 |

### Example 5: Demonstration that PEO does not ruin hydrophobicity

Latex #4 was mixed with additives and then coated onto Whatman™ filter paper No. 4. The weight ratio of dried Latex formulation to paper was 0.55:1. Samples were dried for 3 min. at 150°C. Tensile strength (stress at break) was measured at speed of 100 mm/min, in the machine direction (MD) and the cross direction (CD) of the paper. Tensile strength was measured on dry samples ("Dry") and on samples after immersion at 25°C for 10 minutes in water ("Wet") or in isopropyl alcohol ("IPA"). Results are in Newton per centimeter.

Also measured was the water absorption, measured with the Cobb test (ISO 535) at 1 minute. Results are reported in units of g/m².

All the samples used Latex #4, and the samples with PEO all used WSR-N10.

Also tested was Tergitol™ 15-s-40 surfactant ("Surf1") from Dow Chemical Company. Surfactants like this one are sometimes used in an attempt to improve stability.

| Sample | Additive | wt% | MD dry | MD wet | MD IPA | CD dry | CD wet | CD IPA | Cobb |
|---|---|---|---|---|---|---|---|---|---|
| 5-C | none | 0 | 35 | 23 | 16 | 27 | 17 | 12 | 13.7 |
| 5-S | Surf1 | 1 | 36 | 21 | 15 | 27 | 15 | 11 | 15.7 |
| 5-P05 | PEO | 0.5 | 35 | 21 | 15 | 26 | 16 | 11 | 13.5 |
| 5-P10 | PEO | 1 | 37 | 21 | 14 | 26 | 16 | 11 | 14.7 |

Neither the PEO nor the surfactant had a significant effect on the tensile strength. The surfactant causes a large increase in hydrophilicity, while the PEO causes a much smaller increase in hydrophilicity.

### Example 6: Demonstration that PEO does not create unacceptably large amount of foam.

Tendency to create foam was tested as follows. An amount of 30 ml of formulation was put in a container of volume 150 ml. The formulation was then mixed with an Ultra Turrax™ disperser for various amounts of time, and the volume of the resulting foam was measured.

All the samples used Latex #4, and the samples with PEO all used WSR-N10. Also tested were the following surfactants, because surfactants like the following are sometimes used in an attempt to improve stability:
- Tergitol™ 15-s-40 surfactant ("Surf1") from The Dow Chemical Company
- Triton™ CG-50 surfactant ("Surf2") from The Dow Chemical Company
- Lutensol XL-80 surfactant ("Surf3") from BASF
Results were as follows.

**Foam Height (ml)**

| | | | Time (minutes) | | | | | | |
|---|---|---|---|---|---|---|---|---|---|
| Sample | Additive | wt % | 0 | 0.5 | 1 | 1.5 | 2 | 2.5 | 3 |
| 6-C | none | 0 | 38 | 62 | 67 | 69 | 71 | 72 | 74 |
| 6-S1-C | Surf1 | 1 | 39 | 66 | 67 | 69 | 70 | 71 | 73 |
| 6-S2-C | Surf2 | 1 | 38 | 58 | 71 | 79 | 85 | 90 | 94 |
| 6-S3-C | Surf3 | 1 | 39 | 56 | 64 | 70 | 75 | 80 | 84 |
| 6-P05 | PEO | 0.5 | 38 | 65 | 68 | 71 | 71 | 73 | 75 |
| 6-P10 | PEO | 1 | 38 | 63 | 68 | 71 | 73 | 75 | 78 |

The PEO samples showed an acceptably low tendency to create foam. At short time, the PEO samples showed less tendency to create foam than the sample with Tergitol™ 15-S-40. At long times, the PEO samples showed less tendency to create foam than the samples with Triton™ CG-50 and Lutensol™ XL-80 surfactants.

## Claims

1. An aqueous composition comprising a latex polymer and polyethylene oxide,
wherein said polyethylene oxide has solution viscosity of 5 mPa*s to 150 mPa*s;
wherein said solution viscosity is measured by dissolving said polyethylene oxide in water at weight ratio of 5 parts polyethylene oxide to 95 parts water and measuring the viscosity of the solution using a Brookfield viscometer LVD2 with number 2 spindle at 30 rpm at 25°C;
wherein said polyethylene oxide is present in an amount, by weight based on the dry weight of said latex polymer, of 0.3% to 1.5%; and
wherein the latex polymer contains polymerized units of one or more ethenyl esters of a substituted or unsubstituted alkanoic acid, one or more vinyl aromatic monomers, one or more acrylic monomers, or a mixture thereof.

2. The aqueous composition of claim 1 wherein said polyethylene oxide is present in an amount, by weight based on the dry weight of said latex polymer, of 0.4% to 1.1%.

3. The aqueous composition of claim 1 wherein said polyethylene oxide has number-average molecular weight of 80,000 to 120,000.

4. A method of applying an aqueous composition to a substrate, said method comprising exposing an aqueous composition of claim 1 to a shear rate of 1,000 s⁻¹ or higher and applying a layer of said composition to a substrate.

5. The method of claim 4 wherein the aqueous composition is applied to the substrate by roll coating.

6. The method of claim 4 wherein the substrate is selected from paper, paperboard, polymeric film, woven fabrics, nonwoven fabrics, unbonded mats of nonwoven fibers, and release papers.

## Patentansprüche

1. Eine wässrige Zusammensetzung, beinhaltend ein Latexpolymer und Polyethylenoxid,
wobei das Polyethylenoxid eine Lösungsviskosität von 5 mPa*s bis 150 mPa*s aufweist;
wobei die Lösungsviskosität gemessen wird durch Auflösen des Polyethylenoxids in Wasser im Gewichtsverhältnis von 5 Teilen Polyethylenoxid zu 95 Teilen Wasser und Messen der Viskosität der Lösung unter Verwendung eines Brookfield-Viskosimeters LVD2 mit Spindel Nr. 2 bei 30 U/min bei 25 °C;
wobei das Polyethylenoxid in einer Menge, nach Gewicht, bezogen auf das Trockengewicht des Latexpolymers, von 0,3 % bis 1,5 % vorhanden ist; und
wobei das Latexpolymer polymerisierte Einheiten von einem oder mehreren Ethenylestern einer substituierten oder unsubstituierten Alkansäure, einem oder mehreren vinylaromatischen Monomeren, einem oder mehreren Acrylmonomeren oder einer Mischung davon enthält.

2. Wässrige Zusammensetzung gemäß Anspruch 1, wobei das Polyethylenoxid in einer Menge, nach Gewicht, bezogen auf das Trockengewicht des Latexpolymers, von 0,4 % bis 1,1 % vorhanden ist.

3. Wässrige Zusammensetzung gemäß Anspruch 1, wobei das Polyethylenoxid ein zahlenmittleres Molekulargewicht von 80 000 bis 120 000 aufweist.

4. Ein Verfahren zum Aufbringen einer wässrigen Zusammensetzung auf ein Substrat,
wobei das Verfahren das Aussetzen einer wässrigen Zusammensetzung gemäß Anspruch 1 gegenüber einer Schergeschwindigkeit von 1 000 s⁻¹ oder höher und das Aufbringen einer Schicht der Zusammensetzung auf ein Substrat beinhaltet.

5. Verfahren gemäß Anspruch 4, wobei die wässrige Zusammensetzung durch Walzenbeschichten auf das Substrat aufgebracht wird.

6. Verfahren gemäß Anspruch 4, wobei das Substrat aus Papier, Pappe, Polymerfolie, Webstoffen, Vliesstoffen, ungebundenen Matten aus Vliesfasern und Trennpapieren ausgewählt ist.

## Revendications

1. Une composition aqueuse comprenant un polymère de latex et de l'oxyde de polyéthylène,
dans laquelle ledit oxyde de polyéthylène présente une viscosité en solution de 5 mPa*s à 150 mPa*s ;
dans laquelle ladite viscosité en solution est mesurée en dissolvant ledit oxyde de polyéthylène dans de l'eau à un rapport en poids de 5 parties d'oxyde de polyéthylène à 95 parties d'eau et en mesurant la viscosité de la solution à l'aide d'un viscosimètre Brookfield LVD2 avec un mobile numéro 2 à 30 tr/min à 25 °C ;
dans laquelle ledit oxyde de polyéthylène est présent dans une quantité, en poids rapporté au poids sec dudit polymère de latex, de 0,3 % à 1,5 % ; et
dans laquelle le polymère de latex contient des unités polymérisées d'un ou de plusieurs esters éthényliques d'un acide alcanoïque substitué ou non substitué, d'un ou de plusieurs monomères vinyl aromatiques, d'un ou de plusieurs monomères acryliques, ou d'un mélange de ceux-ci.

2. La composition aqueuse de la revendication 1 dans laquelle ledit oxyde de polyéthylène est présent dans une quantité, en poids rapporté au poids sec dudit polymère de latex, de 0,4 % à 1,1 %.

3. La composition aqueuse de la revendication 1 dans laquelle ledit oxyde de polyéthylène présente une masse moléculaire moyenne en nombre de 80 000 à 120 000.

4. Une méthode d'application d'une composition aqueuse sur un substrat, ladite méthode comprenant le fait d'exposer une composition aqueuse de la revendication 1 à une vitesse de cisaillement de 1 000 s⁻¹ ou plus et d'appliquer une couche de ladite composition sur un substrat.

5. La méthode de la revendication 4 dans laquelle la composition aqueuse est appliquée sur le substrat par enduction au rouleau.

6. La méthode de la revendication 4 dans laquelle le substrat est sélectionné parmi du papier, du carton, du film polymère, des tissus tissés, des tissus non tissés, des mats non liés de fibres non tissées, et des papiers antiadhésifs.
